# FASCICULE DE BREVET EUROPEEN

(11) **EP 4 089 906 B1**
(45) Date de publication et mention de la délivrance du brevet: **26.08.2026**
(21) Numéro de dépôt: 22172014.7
(22) Date de dépôt: 06.05.2022
(51) Int. Cl.: H02M 3/158, H02M 1/36, H02M 1/14

(54) **CONVERTISSEUR ABAISSEUR DC-DC À DÉCOUPAGE**
DC-DC-ABWÄRTSWANDLER MIT ABSCHALTFUNKTION
SWITCHING MODE DC-DC VOLTAGE DOWN-CONVERTER

(30) Priorité: 10.05.2021 FR 2104945
(43) Date de publication de la demande: 16.11.2022
(73) Titulaire: STMICROELECTRONICS (GRENOBLE 2) SAS, 38000 Grenoble (FR)
(72) Inventeur: ESCH, Hélène, 38170 SEYSSINET PARISET (FR); MEILLEREUX, Alexandre, 38360 SASSENAGE (FR)
(74) Mandataire: Cabinet Beaumont

(56) Documents cités:
- US-A- 5 959 443
- US-A1- 2009 322 300
- US-A1- 2020 235 667
- US-B1- 8 405 369
- LEE KYOUNGJIN ET AL: "A high efficiency wide-load-range asynchronous boost converter with time-based dual-mode control for SSD applications", 2016 IEEE ASIAN SOLID-STATE CIRCUITS CONFERENCE (A-SSCC), IEEE, 7 November 2016 (2016-11-07), pages 13 - 16, XP033061201, ISBN: 978-1-5090-3699-8, [retrieved on 20170206], DOI: 10.1109/ASSCC.2016.7844123
- LI QINQIN ET AL: "Adaptive current-threshold detector for an adaptive on-time Buck converter at light load", ANALOG INTEGRATED CIRCUITS AND SIGNAL PROCESSING, SPRINGER NEW YORK LLC, US, vol. 95, no. 3, 1 March 2018 (2018-03-01), pages 541 - 549, XP036499028, ISSN: 0925-1030, [retrieved on 20180301], DOI: 10.1007/S10470-018-1140-6

## Description

### Domaine technique

La présente description concerne de façon générale les circuits électroniques, et, plus particulièrement les convertisseurs abaisseurs DC-DC à découpage ("Switched Mode Power Supply Buck Converter - SMPS Buck Converter" en anglais).

### Technique antérieure

Parmi les convertisseurs abaisseurs DC-DC à découpage, ou convertisseurs SMPS abaisseurs, connus, on distingue des convertisseurs fonctionnant en modulation de fréquence d'impulsions ("Pulse Frequency Modulation" en anglais), aussi appelés convertisseurs **PFM.**

Dans un convertisseur PFM connu, lorsque la tension de sortie du convertisseur diminue et s'éloigne d'une valeur de consigne, de l'énergie est fournie à un élément inductif lors d'une phase d'accumulation d'énergie, et est ensuite restituée, par l'élément inductif, à la sortie du convertisseur lors d'une phase de restitution d'énergie. Chaque succession d'une phase d'accumulation d'énergie et d'une phase de restitution d'énergie correspond à une impulsion de courant dans l'élément inductif.

Dans un tel convertisseur PFM connu, les impulsions de courant dans l'élément inductif ont toutes une même valeur maximale. La régulation de la tension de sortie du convertisseur s'effectue alors en modifiant la fréquence des impulsions de courant. En outre, la valeur maximale des impulsions de courant détermine le courant moyen maximum que le convertisseur peut délivrer, c'est-à-dire le courant moyen maximum qu'une charge peut tirer sur la sortie du convertisseur. Ce courant moyen maximum que le convertisseur est en mesure de délivrer est la borne haute de la plage de valeurs de courant sur laquelle le convertisseur fonctionne, la borne basse correspondant à un courant moyen nul ou presque.

Les documents US 8 405 369 B1, US 5 959 443 A, US 2020/235667 A1, US 2009/322300 A1, "A high efficiency wide-load-range asynchronous boost converter with time-based dual-mode control for SSD applications",2016 IEEE ASIAN SOLID-STATE CIRCUITS CONFERENCE (A-SSCC), IEEE, 7 novembre 2016 (2016-11-07), DOI: 10.1109/ ASSCC.2016.7844123, ISBN: 978-1-5090-3699-8 et "Adaptive current-threshold detector for an adaptive on-time Buck converter at light load",ANALOG INTEGRATED CIRCUITS AND SIGNAL PROCESSING, SPRINGER NEW YORK LLC, US, vol. 95, no. 3, 1 mars 2018 (2018-03-01),ISSN: 0925-1030, DOI: 10.1007/S10470-018-1140-6 divulguent également des convertisseurs DC-DC à découpage.

### Résumé de l'invention

Il existe un besoin de pallier tout ou partie des inconvénients des convertisseurs PFM connus.

Par exemple, il existe un besoin d'augmenter la plage de valeurs de courant moyen que les convertisseurs PFM connus peuvent délivrer, sans augmenter le temps de démarrage de ces convertisseurs et sans augmenter l'amplitude des oscillations ("ripples" en anglais) de la tension de sortie fournie par ces convertisseurs.

Un mode de réalisation pallie tout ou partie des inconvénients tout ou partie des inconvénients des convertisseurs PFM connus.

Par exemple, un mode de réalisation permet d'augmenter la valeur maximale du courant moyen que peut délivrer un convertisseur PFM, sans augmenter son temps de démarrage et sans augmenter l'amplitude des oscillations de la tension de sortie fournie par le convertisseur.

Un mode de réalisation prévoit un convertisseur abaisseur DC-DC à découpage tel que divulgué dans la revendication indépendante 1.

Un mode de réalisation prévoit un procédé de commande tel que divulgué dans la revendication indépendante 2.

Selon un mode de réalisation, le convertisseur comprend en outre un circuit configuré pour fournir au circuit de commande un signal indiquant quand le courant dans l'élément inductif est nul.

Selon un mode de réalisation, le circuit de commande est configuré pour sélectionner la valeur maximale parmi au moins la première valeur et la deuxième valeur de sorte que ladite valeur maximale augmente lorsque le courant moyen augmente, et diminue lorsque le courant moyen diminue.

Selon un mode de réalisation :
la première valeur est inférieure à la deuxième valeur ;
le circuit de commande sélectionne la deuxième valeur lorsque le courant moyen est supérieur à un premier seuil ; et
le circuit de commande sélectionne la première valeur lorsque le courant moyen est inférieur à un deuxième seuil inférieur ou égal au premier seuil.

Selon un mode de réalisation, le deuxième seuil est inférieur au premier seuil.

Selon un mode de réalisation, lorsque la première valeur est sélectionnée :
- à la fin de chaque impulsion de courant le circuit de commande déclenche une première temporisation représentative du premier seuil ; et
- le circuit de commande sélectionne la deuxième valeur si un début de l'impulsion de courant suivante se produit pendant ladite première temporisation,
et, lorsque la deuxième valeur est sélectionnée :
- à la fin de chaque impulsion de courant le circuit de commande déclenche une deuxième temporisation représentative du deuxième seuil ; et
- le circuit de commande sélectionne la première valeur si un début de l'impulsion de courant suivante se produit après ladite deuxième temporisation.

Selon un mode de réalisation, une durée de chaque première temporisation est inférieure à une durée de chaque deuxième temporisation.

Selon un mode de réalisation, la valeur maximale est sélectionnée parmi au moins la première valeur, la deuxième valeur et une troisième valeur supérieure à la deuxième valeur.

Selon un mode de réalisation :
le circuit de commande sélectionne la troisième valeur lorsque le courant moyen est supérieur à un troisième seuil supérieur au premier seuil ; et
le circuit de commande sélectionne la deuxième valeur lorsque le courant moyen est inférieur à un quatrième seuil supérieur au premier seuil et inférieur ou égal au troisième seuil, de préférence inférieur au troisième seuil.

Selon un mode de réalisation :
lorsque la deuxième valeur est sélectionnée :
   - à la fin de chaque impulsion de courant le circuit de commande déclenche en outre une troisième temporisation représentative du troisième seuil ; et
   - le circuit de commande sélectionne la troisième valeur si un début de l'impulsion de courant suivante se produit pendant ladite troisième temporisation,
et, lorsque la troisième valeur est sélectionnée :
   - à la fin de chaque impulsion de courant le circuit de commande déclenche une quatrième temporisation représentative du quatrième seuil ; et
   - le circuit de commande sélectionne la deuxième valeur si un début de l'impulsion de courant suivante se produit après ladite quatrième temporisation.

Selon un mode de réalisation, la fin de chaque impulsion de courant correspond à une ouverture du deuxième interrupteur alors que le premier interrupteur est ouvert, et le début de chaque impulsion de courant correspond à une fermeture du premier interrupteur alors que le deuxième interrupteur est ouvert.

Selon un mode de réalisation, le courant moyen est déterminé à partir des signaux de commande des premier et deuxième interrupteurs.

Selon un mode de réalisation, les premier et deuxième interrupteurs sont commandés en modulation de fréquence d'impulsion, PFM.

Selon un mode de réalisation, à chaque impulsion de courant, une durée de l'état passant du premier interrupteur est déterminée par une comparaison d'une première rampe de tension avec un premier potentiel déterminé par une valeur de consigne d'un potentiel de sortie du convertisseur, et une durée de l'état passant du deuxième interrupteur est déterminée par une comparaison d'une deuxième rampe de tension avec un deuxième potentiel déterminé par la valeur de consigne, les pentes des première et deuxième rampes de tension étant différentes selon la valeur sélectionnée comme valeur maximale.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière très schématique, un mode de réalisation d'un convertisseur PFM ;
la figure 2 représente des chronogrammes illustrant un mode de réalisation d'un procédé de commande mis en œuvre dans le convertisseur de la figure 1 ;
la figure 3 représente, sous la forme d'un organigramme, le procédé illustré par la figure 2 ;
la figure 4 illustre, sous la forme d'une courbe, un exemple de mise en œuvre du procédé des figures 2 et 3 ;
la figure 5 représente, sous la forme d'un organigramme, un mode de mise en œuvre d'une étape du procédé des figures 2 à 4 ;
la figure 6 représente, sous la forme d'un organigramme, un mode de mise en œuvre d'une autre étape du procédé des figures 2 à 4 ;
la figure 7 illustre, par des chronogrammes, la mise en œuvre du procédé de la figure 3 avec les étapes décrites en relation avec les figures 5 et 6 ;
la figure 8 représente un exemple de mode de réalisation d'un circuit pour mettre en œuvre les étapes des figures 5 et 6 ;
la figure 9 représente un exemple plus détaillé de mode de réalisation du convertisseur de la figure 1 ;
la figure 10 représente un exemple de mode de réalisation d'un générateur de rampe du convertisseur de la figure 9 ; et
la figure 11 représente, sous la forme d'un organigramme, une variante de réalisation du procédé des figures 2 à 4.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les systèmes électroniques usuels et les applications usuelles comprenant un convertisseur PFM n'ont pas été décrits, les modes de réalisation, modes de mise en œuvre et variantes décrits étant compatibles avec ces systèmes électroniques usuels et ces applications usuelles. En outre, les conditions usuelles conditionnant la génération d'une impulsion de courant dans l'élément inductif d'un convertisseur PFM n'ont pas toutes été décrites, les modes de réalisation décrits étant compatibles avec ces conditions usuelles et les mises en œuvre usuelles de la vérification de ces conditions.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

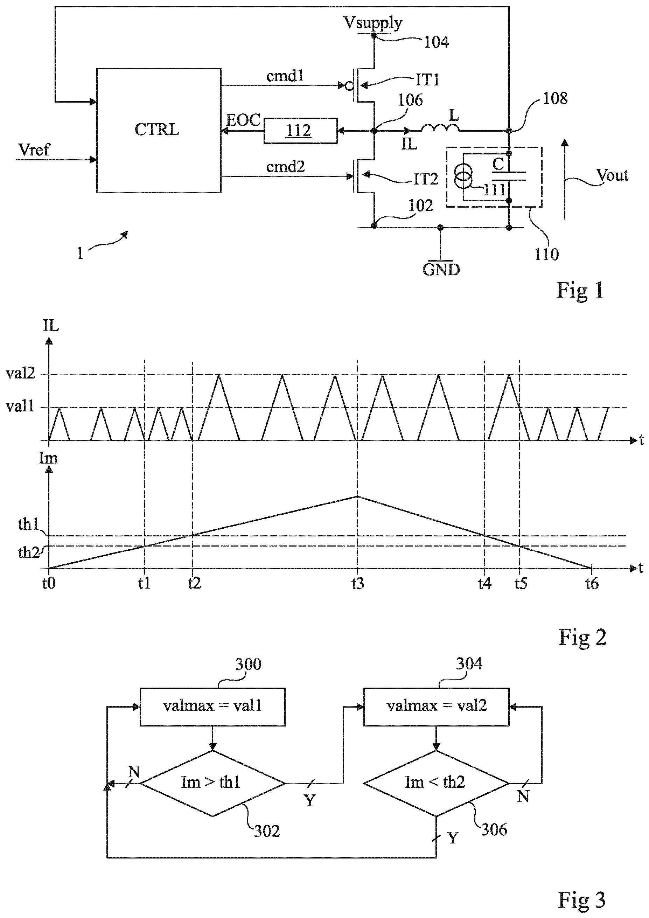

La figure 1 représente, de manière très schématique, un mode de réalisation d'un convertisseur PFM 1.

Le convertisseur 1 est configuré pour fournir un potentiel continu (DC) de sortie Vout à partir d'un potentiel continu (DC) d'alimentation Vsupply. Les deux potentiels sont référencés par rapport à un potentiel de référence GND, par exemple la masse. La valeur du potentiel Vout est inférieure à celle du potentiel Vsupply.

Le convertisseur 1 est configuré pour fournir le potentiel Vout de sorte qu'il soit égal à une valeur de consigne. Le convertisseur 1 reçoit cette valeur de consigne sous la forme d'un potentiel Vref représentatif de la valeur de consigne. Le potentiel Vref est référencé au potentiel GND.

Dans la suite de la description, on considère, à titre d'exemple, que la valeur du potentiel Vref est égale à la valeur de consigne du potentiel Vout. Ainsi, la comparaison de la valeur d'un potentiel donné avec la valeur de consigne peut s'effectuer directement en comparant ce potentiel et le potentiel Vref. Toutefois, la personne du métier est en mesure d'adapter la description qui va suivre au cas où la valeur du potentiel Vref est plus faible que la valeur de consigne du potentiel Vout. Dans ce cas, la comparaison de la valeur d'un potentiel donné avec la valeur de consigne peut s'effectuer en divisant ce potentiel, par exemple au moyen d'un pont diviseur de tension, de manière à obtenir un potentiel intermédiaire représentatif de la valeur de ce potentiel donné. Ce potentiel intermédiaire est ensuite comparé avec le potentiel Vref ce qui revient à comparer la valeur du potentiel Vout avec sa valeur de consigne.

Le convertisseur 1 comprend un interrupteur IT1 connecté entre un noeud 104 configuré pour recevoir le potentiel Vsupply et un noeud interne 106. A titre d'exemple, l'interrupteur IT1 est mis en œuvre par un transistor MOS (Métal Oxyde Semiconducteur - "Metal Oxide Semiconductor" en anglais), par exemple un transistor MOS à canal P.

Le convertisseur 1 comprend en outre un interrupteur IT2 connecté entre le noeud 106 et un noeud 102 configuré pour recevoir le potentiel GND. A titre d'exemple, l'interrupteur IT2 est mis en œuvre par un transistor MOS, par exemple un transistor MOS à canal N.

Le convertisseur 1 comprend un élément inductif L connecté entre le noeud 106 et un noeud de sortie 108 du convertisseur 1. Le convertisseur 1 est configuré pour fournir le potentiel Vout sur le noeud 108.

Une capacité C est connectée entre le noeud 108 et le noeud 102. A titre d'exemple, cette capacité C fait entièrement partie du convertisseur 1. Selon un autre exemple, la capacité C correspond à une capacité équivalente d'une capacité de sortie du convertisseur 1 et d'une capacité d'entrée d'une charge 110 connectée entre les noeuds 108 et 102 et alimentée par le convertisseur 1. En figure 1, une source de courant 111 représente le courant tiré par la charge 110 sur le noeud 108, la source de courant 111 étant connectée entre le noeud 108 et le noeud 102, en parallèle de la capacité C.

De manière classique dans un convertisseur PFM, lors d'une phase d'accumulation d'énergie dans l'élément inductif L, l'interrupteur IT1 est passant ("on" en anglais), et l'interrupteur IT2 est bloqué ("off" en anglais), et, à l'inverse, lors d'une phase de restitution de l'énergie par l'élément L au noeud 108, l'interrupteur IT1 est bloqué et l'interrupteur IT2 est passant. Chaque succession d'une phase d'accumulation d'énergie et d'une phase de restitution d'énergie correspond à une impulsion d'un courant IL dans l'élément inductif L.

Le convertisseur 1 comprend un circuit de commande CTRL. Le circuit CTRL est configuré pour commander les interrupteurs IT1 et IT2. Plus exactement, le circuit CTRL est configuré pour commander les interrupteurs IT1 et IT2 en modulation de fréquence d'impulsions. Le circuit CTRL fournit un signal de commande cmd1 à l'interrupteur IT1, et un signal de commande cmd2 à l'interrupteur IT2. Par exemple, le signal cmd1 est un signal binaire à l'état bas pour rendre passant l'interrupteur IT1, et à l'état haut pour rendre bloqué l'interrupteur IT1, le signal cmd2 étant un signal binaire à l'état haut pour rendre passant l'interrupteur IT2, et à l'état bas pour rendre bloqué l'interrupteur IT2, bien que la présente description ne se limite pas à ces exemples de signaux de commande.

A titre d'exemple, le circuit CTRL est configuré pour commander le début d'une impulsion de courant IL dans l'élément L lorsque la valeur du potentiel Vout devient inférieure à un seuil Vout_th, par exemple déterminé ou égal à la valeur de consigne du potentiel Vout. Ainsi, le circuit CTRL est configuré pour recevoir les potentiels Vout et Vref.

De préférence, lorsque la valeur du potentiel Vout devient inférieure au seuil Vout_th, le circuit CTRL est configuré pour conditionner le début d'une impulsion de courant IL au fait que le courant IL dans l'élément L est nul. Dit autrement, le circuit CTRL est configuré pour commander le début d'une impulsion seulement si le potentiel Vout est inférieur au seuil Vout_th et le courant IL est nul. Dit encore autrement, pour chaque impulsion de courant IL dans l'élément inductif, le circuit CTRL commande le début de l'impulsion si le potentiel Vout est inférieur au seuil Vout_th et le courant IL est nul. Par exemple, lorsque le potentiel Vout est inférieur au seuil Vout_th, le circuit CTRL ne commande pas le début d'une nouvelle impulsion de courant IL tant que le courant IL n'est pas nul. Le convertisseur 1 fonctionne alors toujours en mode de conduction discontinue (DCM de l'anglais "Discontinuous Conduction Mode"), et le circuit CTRL commande les interrupteurs IT1 et IT2 de sorte que le convertisseur 1 fonctionne en DCM. Dans ce cas, comme cela est illustrée en figure 1, le circuit CRTL est configuré pour recevoir un signal EOC indiquant lorsque le courant IL est nul. A titre d'exemple, le signal EOC est fourni par un circuit 112 du convertisseur 1, le circuit 112 étant par exemple connecté au noeud 106.

Dans la présente description, le circuit CTRL est configuré pour commander les interrupteurs IT1 et IT2 de sorte que des impulsions de courant IL dans l'élément L aient une valeur maximale valmax sélectionnée parmi deux valeurs val1 et val2, sur la base d'un courant moyen Im tiré sur le noeud 108 par la charge 110. Dit autrement, le circuit CTRL est configuré pour sélectionner l'une ou l'autre des valeurs val1 et val2 en fonction de la valeur du courant Im, et pour commander ensuite les interrupteurs IT1 et IT2 de sorte que chaque impulsion de courant IL ait une valeur maximale Valmax égale à la valeur val1 ou val2 sélectionnée. Dit encore autrement, le circuit CTRL permet d'adapter la valeur maximale valmax des impulsions de courant IL en fonction de la valeur du courant Im. De préférence, cette adaptation de la valeur valmax des impulsions IL est discrète, c'est-à-dire que la valeur valmax ne peut pas varier de manière continue en fonction de la valeur du courant Im, ou, dit autrement, que la valeur valamx ne peut prendre que des valeurs discrètes.

Le fait que les impulsions de courant IL puissent prendre deux valeurs maximales val1 et val2 diffère de ce qui est connu dans les convertisseurs PFM usuels où la valeur maximale des impulsions de courant dans l'élément inductif de ces convertisseurs reste la même quelle que soit la valeur du courant moyen tiré par une charge connectée à leur sortie.

Selon un mode de réalisation, le circuit de commande est configuré pour sélectionner la valeur maximale valmax parmi les valeurs val1 et val2 de sorte que la valeur maximale valmax des impulsions de courants IL augmente lorsque le courant moyen augmente, et diminue lorsque le courant moyen diminue. Dit autrement, en considérant que la valeur val2 est supérieure à la valeur val1, lorsque la valeur valmax des impulsions est égale à la valeur val1, c'est-à-dire que la valeur val1 ou val2 sélectionnée est la valeur val1, et que le courant Im augmente, le circuit CTRL est configuré pour sélectionner la valeur val2, de sorte que la valeur valmax augmente, et, de manière réciproque, lorsque la valeur valmax est égale à val2 et que le courant Im diminue, le circuit CTRL est configuré pour sélectionner la valeur val1, de sorte que la valeur valmax diminue.

Il en résulte que, pour des valeurs du courant Im faibles relativement à des valeurs élevées du courant Im, les impulsions de courant IL ont une amplitude maximale valmax faible relativement à une amplitude maximale valmax élevée qu'ont les impulsions de courant IL pour les valeurs élevées du courant Im.

Ainsi, lorsque la charge 110 tire un courant moyen Im de faible valeur, l'amplitude maximale des impulsions de courant IL est faible ce qui permet de réduire l'amplitude des oscillations du potentiel Vout par rapport au cas où l'amplitude maximale des impulsions de courant IL serait constante et élevée. En outre, lorsque l'amplitude maximale des impulsions de courant IL est élevée, la valeur maximale du courant Im que la charge 110 peut tirer du noeud 108 sans perdre la régulation du potentiel Vout à sa valeur de consigne est plus élevée que dans le cas où l'amplitude maximale des impulsions de courant IL serait constante et faible. En effet, la valeur maximale du courant Im que la charge 110 peut tirer du noeud 108 sans perdre la régulation de la tension Vout à sa valeur de consigne est égale à la moitié de la valeur maximale de l'amplitude des impulsions de courant IL.

Pour augmenter la valeur maximale du courant Im dans un convertisseur PFM ayant des impulsions de courant IL d'amplitude maximale constante, on pourrait penser à augmenter l'amplitude maximale constante des impulsions de courant IL. Toutefois, dans un tel cas, lorsque le courant Im tiré par la charge 110 aurait été faible, par exemple au moins deux fois plus faible que le courant Im maximal, cela aurait conduit à des variations de la tension Vout de forte amplitude, ce qui n'est pas souhaitable. Pour réduire l'amplitude de ces oscillations de la tension Vout, on aurait alors pu penser à augmenter la valeur de la capacité C. Toutefois, cela augmenterait considérablement le temps de démarrage du convertisseur 1, du fait que le temps nécessaire pour charger la capacité C jusqu'à ce que le potentiel Vout soit égal à sa valeur de consigne serait plus long. En outre, cela conduirait à augmenter l'encombrement de l'ensemble du convertisseur 1 et de la capacité C, ce qui n'est pas souhaitable.

Selon un mode de réalisation, dans lequel la valeur val1 est inférieure à la valeur val2, le circuit CTRL est configuré pour sélectionner la valeur val2 lorsque le courant Im est supérieur à un seuil th1, et pour sélectionner la valeur val1 lorsque le courant Im est inférieur à un seuil th2, le seuil th2 étant inférieur ou égal ou seuil th1.

Selon un mode de réalisation, le seuil th2 est inférieur (c'est-à-dire strictement inférieur ici) au seuil th1, ce qui permet de supprimer d'éventuelles instabilités sur la valeur maximale valmax des impulsions de courant IL qui pourraient se produire lorsque les seuils th1 et th2 sont égaux et que la valeur valmax commute entre les valeurs val1 et val2.

La figure 2 représente des chronogrammes illustrant un mode de réalisation du procédé de commande mis en œuvre dans le convertisseur 1 de la figure 1, et, plus particulièrement, du procédé de commande des interrupteurs IT1 et IT2, ce procédé étant mis en œuvre par le circuit CTRL.

La figure 2 représente l'évolution en fonction du temps t du courant IL (en haut en figure 2) et du courant moyen Im (en bas en figure 2).

Dans l'exemple de la figure 2, le seuil th2 est inférieur au seuil th1, bien que ces seuils puissent être égaux dans d'autres exemples non illustrés.

Dans l'exemple de la figure 2, à un instant t0, le courant Im est inférieur aux seuils th1 et th2, d'où il résulte que les impulsions du courant IL ont une valeur maximale valmax égale à la valeur val1.

A un instant t1 postérieur à l'instant t0, le courant Im devient supérieur au seuil th2. Toutefois, comme le seuil th2 est ici inférieur au seuil th1, et qu'à l'instant t1 le courant Im est toujours inférieur au seuil th1, la valeur maximale valmax des impulsions de courant IL reste égale à la valeur val1.

A un instant t2 postérieur à l'instant t1, le courant Im devient égal puis supérieur au seuil th1. La valeur val2 est alors sélectionnée, et, à partir de l'instant t2, la valeur maximale valmax des impulsions de courant IL est égale à val2.

Dans l'exemple de la figure 2, le courant Im augmente de l'instant t0 jusqu'à un instant t3 postérieur à l'instant t2. Ainsi, entre l'instant t0 et l'instant t2 la fréquence des impulsions de courant IL augmente. En outre, cette fréquence change, par exemple diminue, lorsque la valeur maximale valmax des impulsions de courant IL commute de la valeur val1 à la valeur val2. A partir de l'instant t2 jusqu'à l'instant t3, la fréquence des impulsions de courant IL augmente.

A un instant t4 postérieur à l'instant t3, le courant Im devient inférieur au seuil th1. Toutefois, comme le seuil th2 est ici inférieur au seuil th1, et qu'à l'instant t3 le courant Im est toujours supérieur au seuil th2, la valeur maximale valmax des impulsions de courant IL reste égale à la valeur val2.

A un instant t5 postérieur à l'instant t4, le courant Im devient inférieur au seuil th2. La valeur val1 est alors sélectionnée, et, à partir de l'instant t4, la valeur maximale valmax des impulsions de courant IL est égale à val1.

Dans l'exemple de la figure 2, le courant Im diminue de l'instant t3 jusqu'à un instant t6 postérieur à l'instant t5. Ainsi, entre l'instant t3 et l'instant t5 la fréquence des impulsions de courant IL diminue. En outre, cette fréquence change, par exemple augmente, lorsque la valeur maximale valmax des impulsions de courant IL commute de la valeur val2 à la valeur val1. A partir de l'instant t5 jusqu'à l'instant t6, la fréquence des impulsions de courant IL diminue.

Bien que cela n'ait pas été détaillé ci-dessus, chaque impulsion de courant IL débute par la fermeture de l'interrupteur IT1 alors que l'interrupteur IT2 est ouvert. Le courant IL augmente alors jusqu'à atteindre la valeur valmax sélectionnée (val1 entre les instants t0 et t2, et entre les instants t5 et t6 ; val2 entre les instants t2 et t5). Le moment où le courant IL atteint la valeur valmax sélectionnée correspond au moment où l'interrupteur IT1 est commuté à l'état bloqué et l'interrupteur IT2 est commuté à l'état passant. Le courant IL décroit alors jusqu'à s'annuler. Le moment où le courant s'annule correspond au moment où l'interrupteur IT2 est commuté à l'état ouvert.

La figure 3 représente, sous la forme d'un organigramme, le procédé illustré par les chronogrammes de la figure 2.

A une étape 300 (bloc "valmax = val1"), la valeur valmax est égale à la valeur val1, ou dit autrement, le circuit CTRL (figure 1) a sélectionné la valeur val1 comme valeur maximale valmax des impulsions de courant IL.

L'étape 300 est suivie par une étape 302 (bloc "Im > th1") lors de laquelle le circuit CTRL compare le courant Im au seuil th1.

Si le courant Im est inférieur au seuil th1 (sortie N de l'étape 302), le procédé se poursuit à l'étape 300 et la valeur valmax reste égale à la valeur val1.

Si le courant Im est supérieur au seuil th1 (sortie Y de l'étape 302), le procédé se poursuit à une étape 304 (bloc "valmax = val2").

A l'étape 304, la valeur valmax devient égale à la valeur val2, ou, dit autrement, le circuit CTRL sélectionne la valeur val2 comme valeur maximale valmax.

L'étape 304 est suivie par une étape 306 (bloc "Im < th2") lors de laquelle le circuit CTRL compare le courant Im au seuil th2.

Si le courant Im est supérieur au seuil th2 (sortie N de l'étape 306), le procédé se poursuit à l'étape 304 et la valeur valmax reste égale à la valeur val2.

Si le courant Im est inférieur au seuil th2 (sortie Y de l'étape 306), le procédé se poursuit à l'étape 300 lors de laquelle la valeur valmax devient égale à la valeur val1, ou, le circuit CTRL sélectionne la valeur val1 comme valeur maximale valmax.

Bien que l'on ait décrit en relation avec la figure 2 le cas où le seuil th2 est inférieur au seuil th1, la personne du métier est en mesure d'adapter le procédé ci-dessus au cas où les seuils th1 et th2 sont égaux.

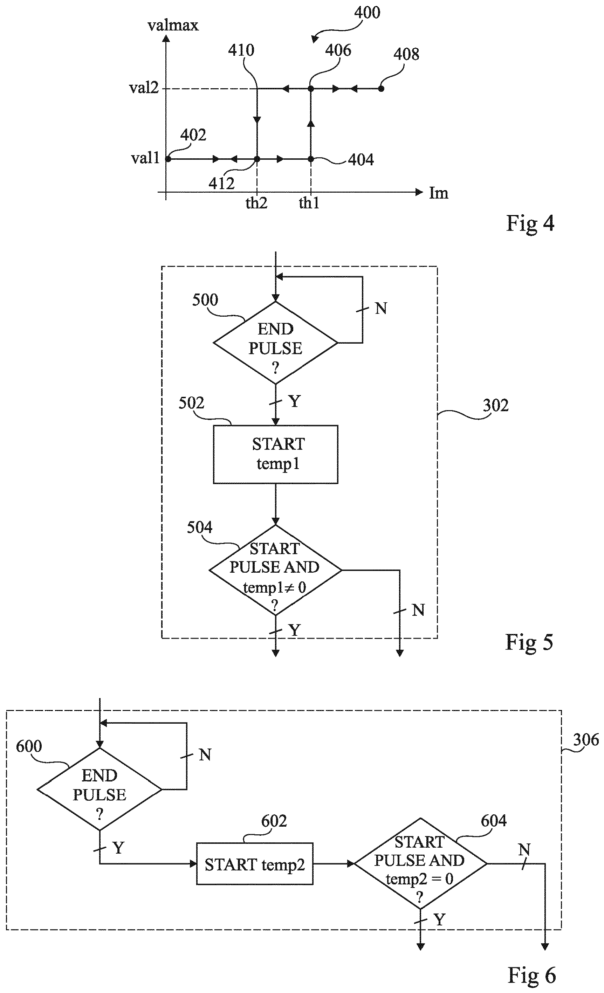

La figure 4 illustre, sous la forme d'une courbe 400, un exemple de mise en œuvre du procédé des figures 2 et 3. Plus particulièrement, la figure 4 illustre l'évolution de la valeur maximale valmax des impulsions de courant IL en fonction de la valeur du courant moyen Im, dans un exemple où le seuil th2 est inférieur au seuil th1.

Lorsque le courant Im augmente depuis une valeur inférieure aux seuils th1 et th2 (point 402 de la courbe 400), la valeur valmax reste égale à la valeur val1 jusqu'à ce que la valeur du courant Im atteigne le seuil th1 (point 404 de la courbe). Lorsque la valeur du courant Im continue à augmenter au-dessus du seuil th2, la valeur valmax devient égale à la valeur val2 (point 406 de la courbe 400).

A l'inverse, lorsque le courant Im diminue depuis une valeur supérieure aux seuils th1 et th2 (point 408 de la courbe 400), la valeur valmax reste égale à la valeur val2 jusqu'à ce que la valeur du courant Im atteigne le seuil th2 (point 410 de la courbe). Lorsque la valeur du courant Im continue à diminuer en dessous du seuil th2, la valeur valmax devient égale à la valeur val1 (point 412 de la courbe 400).

Ainsi, du fait que le seuil th2 est inférieur strictement au seuil th1, il y a une hystérésis sur les changements de la valeur valmax entre les valeurs val1 et val2, ce qui permet de réduire les instabilités sur la valeur valmax par rapport au cas où les seuils th1 et th2 sont égaux.

Pour mettre en œuvre le procédé décrit ci-dessus, le convertisseur 1 (figure 1) comprend, par exemple, un circuit configuré pour mesurer l'évolution du courant IL en fonction du temps, et pour fournir un signal représentatif de la valeur du courant moyen Im tiré sur le noeud 108 par la charge 110. Toutefois, un tel circuit peut s'avérer encombrant et peut dégrader les performances du convertisseur, par exemple lorsque le courant IL est mesuré grâce à une résistance connectée en série avec l'élément L entre les noeuds 104 et 108.

Il est ici proposé de tirer profit du fait que la fréquence des impulsions de courant IL, et, plus particulièrement l'écart entre la fin d'une impulsion de courant IL et le début de l'impulsion de courant IL suivante, est une information représentative de la valeur du courant Im. En effet, pour une valeur valmax donnée, cette fréquence augmente, respectivement diminue, quand le courant Im augmente, respectivement diminue, ou, dit autrement, l'écart entre deux impulsions de courant IL successives augmente, respectivement diminue, quand le courant Im diminue, respectivement augmente.

La figure 5 représente, sous la forme d'un organigramme, un mode de mise en œuvre de l'étape 302 du procédé de la figure 3. Dans ce mode de mise en œuvre, les instants de début et de fin des impulsions de courant IL sont utilisés pour estimer ou déterminer le courant Im, ou, dit autrement, pour obtenir une information représentative de la valeur du courant Im. A titre d'exemple, cette étape 302 est mise en œuvre par le circuit CTRL (figure 1).

L'étape 302 débute par une étape 500 (bloc "END PULSE ?"). L'étape 500 consiste à attendre la fin d'une impulsion de courant IL.

L'étape 500 est répétée (sortie N de l'étape 500) jusqu'à la fin d'une impulsion de courant IL, et, plus exactement, jusqu'à un instant où se termine cette impulsion.

Lorsqu'une impulsion de courant IL se termine (sortie Y de l'étape 500), le procédé se poursuit à une étape 502 (bloc "START temp1") lors de laquelle une temporisation temp1 débute.

Le procédé se poursuit à une étape 504 (bloc "START PULSE AND temp1 ≠ 0 ?"). L'étape 504 consiste à attendre le début d'une impulsion de courant IL suivante, et, plus exactement le début de l'impulsion de courant IL suivant l'impulsion de courant IL dont la fin a provoqué le début de la temporisation temp1. En outre, lorsque cette impulsion de courant IL suivante débute, si la temporisation temp1 est terminée (sortie N de l'étape 504 et de l'étape 302 de la figure 3), cela signifie que le courant Im est inférieur au seuil th1. En revanche, si la temporisation temp1 n'est pas terminée lorsque cette impulsion de courant IL suivante débute (sortie Y de l'étape 504 et de l'étape 302), cela signifie que le courant Im est supérieur au seuil th1.

Ainsi, dans le mode de mise en œuvre de l'étape 302 décrit en relation avec la figure 5, la durée ou temporisation temp1 est représentative du seuil th1.

La figure 6 représente, sous la forme d'un organigramme, un mode de mise en œuvre de l'étape 306 du procédé de la figure 3. Dans ce mode de mise en œuvre, les instants de début et de fin des impulsions de courant IL sont utilisés pour estimer le courant Im.

L'étape 306 débute par une étape 600 (bloc "END PULSE"). L'étape 600 consiste, comme l'étape 500 (figure 5) à attendre la fin d'une impulsion de courant IL.

L'étape 600 est répétée (sortie N de l'étape 600) jusqu'à la fin d'une impulsion de courant IL, et, plus exactement, jusqu'à un instant où se termine cette impulsion.

Lorsque l'impulsion de courant IL se termine (sortie Y de l'étape 600), le procédé se poursuit à une étape 602 (bloc "START temp2") lors de laquelle une temporisation temp2 débute.

Le procédé se poursuit à une étape 604 (bloc "START PULSE AND temp2 = 0 ?"). L'étape 604 consiste à attendre le début d'une impulsion de courant IL suivante, et, plus exactement le début de l'impulsion de courant IL suivant l'impulsion de courant IL dont la fin a provoqué le début de la temporisation temp2. En outre, si la temporisation temp2 est terminée lorsque débute cette impulsion de courant IL suivante (sortie Y de l'étape 604 et de l'étape 306), cela signifie que le courant Im est inférieur au seuil th2. En revanche, si la temporisation temp2 n'est pas terminée lorsque débute cette impulsion de courant IL suivante (sortie N de l'étape 604 et de l'étape 306), cela signifie que le courant Im est supérieur au seuil th2.

Ainsi, dans le mode de mise en œuvre de l'étape 306 décrit en relation avec la figure 6, la durée ou temporisation temp2 est représentative du seuil th2.

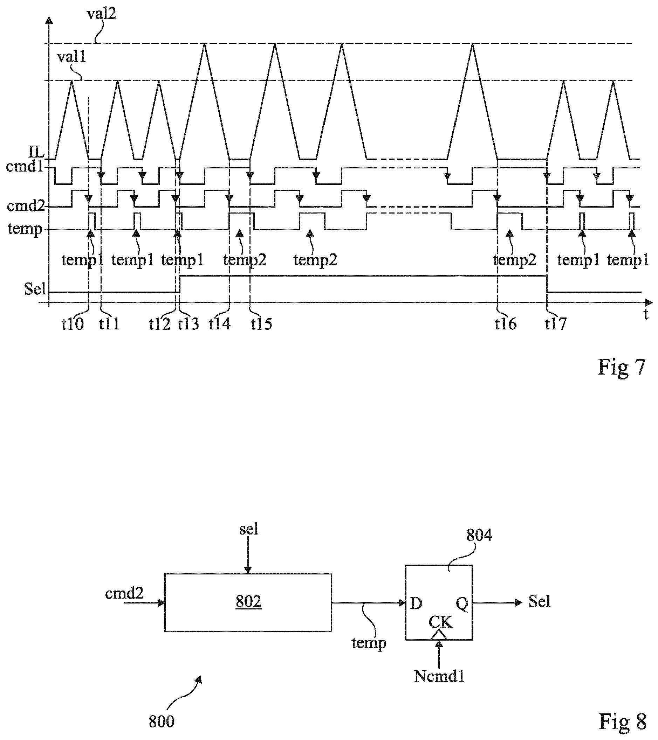

La figure 7 illustre, par des chronogrammes, une mise en œuvre du procédé de la figure 3 avec les étapes décrites en relation avec les figures 5 et 6.

Plus particulièrement, la figure 7 illustre l'évolution, en fonction du temps t, du courant IL, des signaux cmd1 et cmd2 de commande des interrupteurs IT1 et IT2, d'un signal de temporisation temp et d'un signal Sel.

Le signal Sel est un signal numérique dont l'état indique la valeur val1 ou val2 courante de la valeur maximale valmax des impulsions de courant. A titre d'exemple, le signal Sel est un signal binaire dont un premier état, l'état bas dans l'exemple de la figure 7, indique que la valeur val1 est sélectionnée comme valeur maximale valmax des impulsions de courant IL, et dont un deuxième état, l'état haut dans l'exemple de la figure 7, indique que la valeur val2 est sélectionnée comme valeur maximale valmax des impulsions de courant IL.

En outre, dans l'exemple de la figure 7, on considère que l'interrupteur IT1 (figure 1) est passant, respectivement bloqué, lorsque le signal cmd1 est à l'état bas, respectivement haut, l'interrupteur IT2 (figure 1) étant passant, respectivement bloqué, lorsque le signal cmd2 est à l'état haut, respectivement bas.

La personne du métier est en mesure de prévoir d'autres exemples où les niveaux haut et bas du signal cmd1 et/ou du signal cmd2 et/ou du signal Sel sont différents de ce qui est indiqué ici à titre d'exemple.

A un instant t10, le signal Sel est à l'état bas indiquant que la valeur maximale valmax des impulsions de courant IL est égal à val1. L'instant t10 correspond à la fin d'une impulsion de courant IL (étape 500, figure 5). De manière avantageuse, dans l'exemple de la figure 7, la fin d'une impulsion de courant IL est détectée grâce à la commutation du signal cmd2 qui commande la commutation de l'interrupteur IT2 à l'état bloqué, c'est-à-dire, dans cet exemple, une commutation du signal cmd2 à l'état bas. L'instant t10 correspond, en outre, au début de la temporisation temp1 (étape 502, figure 5). Dans cet exemple, cela correspond à une commutation à l'état haut du signal temp.

A un instant t11 suivant, l'impulsion de courant IL suivante débute (étape 504, figure 5). De manière avantageuse, dans l'exemple de la figure 7, le début d'une impulsion de courant IL est détecté grâce à la commutation du signal cmd1 qui commande la commutation de l'interrupteur IT1 à l'état passant, c'est-à-dire, dans cet exemple, une commutation du signal cmd1 à l'état bas. En outre, à l'instant t11, la temporisation temp1 est terminée, le signal temp étant, dans cet exemple, à l'état bas. Ainsi, la valeur valmax reste égale à val1 (sortie N de l'étape 504 en figure 5 et de l'étape 302 en figure 3).

A un instant t12 postérieur à l'instant t11, une impulsion de courant IL se termine, la fin de cette impulsion étant, dans cet exemple, détectée par la commutation à l'état bas du signal cmd2. Cela entraîne, comme la valeur valmax est égale à la valeur val1, le début de la temporisation temp1.

A un instant t13 suivant, l'impulsion de courant IL suivante débute, le début de cette impulsion de courant IL suivante étant, dans cet exemple, détectée par la commutation à l'état bas du signal cmd1. Comme la temporisation temp1 n'est pas terminée à l'instant t13 (signal temp à l'état haut), cela entraîne la sélection de la valeur val2 comme nouvelle valeur maximale valmax des impulsions de courant IL (sortie Y de l'étape 504 de la figure 5 et de l'étape 302 de la figure 3). Ainsi, à l'instant t13, le signal Sel commute, dans cet exemple à l'état haut.

A partir de l'instant t13, les interrupteurs IT1 et IT2 sont commandés de sorte que la valeur maximale valmax des impulsions de courant, notamment celle débutant à l'instant t13, soit égale à la valeur val2.

A un instant t14 postérieur à l'instant t13, l'impulsion de courant IL ayant débuté à l'instant t12 se termine (étape 600, figure 6), la fin de cette impulsion de courant correspondant, dans cet exemple, à la commutation à l'état bas du signal cmd2. Comme la valeur valmax est désormais égale à la valeur val2 (signal Sel à l'état haut), cela entraîne le début de la temporisation temp2 (étape 602, figure 2).

A un instant t15 suivant, l'impulsion de courant IL suivante débute (étape 604, figure 6), le début de cette impulsion de courant Il correspondant, dans cet exemple, à la commutation à l'état bas du signal cmd1. Comme la temporisation temp2 n'est pas terminée à l'instant t15, la valeur valmax reste inchangée et égale à la valeur val2 (sortie N de l'étape 604 en figure 6 et de l'étape 306 en figure 3).

A un instant t16 postérieur à l'instant t15, alors que la valeur valmax est encore égale à la valeur val2, une impulsion de courant IL se termine et la temporisation temp2 débute.

L'impulsion suivante de courant IL débute à un instant t17 postérieur à l'instant t15, alors que la temporisation temp2 est terminée. Cela entraîne la sélection de la valeur val1 comme nouvelle valeur maximale valmax des impulsions de courant IL (sortie Y de l'étape 604 de la figure 6 et de l'étape 306 de la figure 3). Ainsi, à l'instant t17, le signal Sel commute, dans cet exemple à l'état bas.

A titre d'exemple, comme cela est représenté en figure 7, la durée de la temporisation temp1 est inférieure à celle de la temporisation temp2.

La figure 8 représente un exemple de mode de réalisation d'un circuit 800 configuré pour mettre en œuvre les étapes des figures 5 et 6, c'est-à-dire pour mettre en œuvre le procédé illustré par la figure 7.

A titre d'exemple, en figure 8 :
- l'état haut, respectivement bas, du signal cmd1 commande l'état bloqué, respectivement passant, de l'interrupteur IT1,
- l'état haut, respectivement bas, du signal cmd2 commande l'état passant, respectivement bloqué, de l'interrupteur IT2,
- l'état haut, respectivement bas, du signal Sel indique que la valeur valmax est égale à val2, respectivement val1, et
- une temporisation temp1 ou temp2, selon la valeur du signal Sel, débute par une commutation du signal temp à l'état haut et se termine par une commutation du signal temp à l'état bas.

A titre d'exemple, le circuit 800 fait partie du circuit CTRL (figure 1). Le circuit 800 reçoit les signaux signaux cmd1 et cmd2 et fournit le signal Sel. En outre, le circuit 800 utilise le signal Sel pour déterminer laquelle des valeurs val1 et val2 est sélectionnée comme valeur maximale valmax courante des impulsions de courant IL.

Le circuit 800 comprend un circuit 802 configuré pour recevoir le signal cmd2 et une indication de la valeur val1 ou val2 sélectionnée, c'est-à-dire le signal Sel dans cet exemple. Le circuit 800 est en outre configuré pour fournir les temporisations temp1 et temp2, dans cet exemple sous la forme du signal temp.

Plus particulièrement, dans cet exemple, lorsque le signal cmd2 commute à l'état bas, le circuit 802 commute le signal temp à l'état haut pour une durée correspondant à la durée de la temporisation temp1 si le signal Sel est à l'état bas, et pour une durée correspondant à la durée de la temporisation temp2 si le signal Sel est à l'état haut.

Le circuit 800 comprend en outre une bascule 804 de type D ("D flip-flop" en anglais). La bascule 804 a une entrée D de donnée configurée pour recevoir le signal temp. La bascule 804 comprend en outre une entrée de synchronisation CK et une sortie Q. L'état de l'entrée D est recopié sur la sortie Q à chaque front, dans cet exemple montant, du signal reçu par son entrée CK, et le niveau sur la sortie est maintenu (mémorisé) jusqu'au prochain front, dans cet exemple montant, sur son entrée CK. Plus particulièrement, dans cet exemple, l'entrée CK de la bascule 804 est configurée pour recevoir un signal Ncmd1 complémentaire du signal cmd1, le signal Ncmd1 étant à l'état bas, respectivement haut, lorsque le signal cmd1 est à l'état haut, respectivement bas. Ainsi, chaque front descendant du signal cmd1 provoque une mise à jour de la sortie Q de la bascule 804.

Il en résulte que le circuit 800 fournit le signal Sel décrit en relation avec la figure 7.

En fonction du signal Sel, le circuit CTRL (figure 1) adapte alors les durées des états passants des interrupteurs IT1 et IT2 pour que la valeur maximale valmax des impulsions de courant IL soit égale à la valeur val1 ou val2 sélectionnée, c'est-à-dire la valeur va1 ou val2 indiquée par le signal Sel.

La personne du métier est en mesure de prévoir d'autres modes de réalisation de circuits permettant la mise en œuvre des étapes des figures 5 et 6.

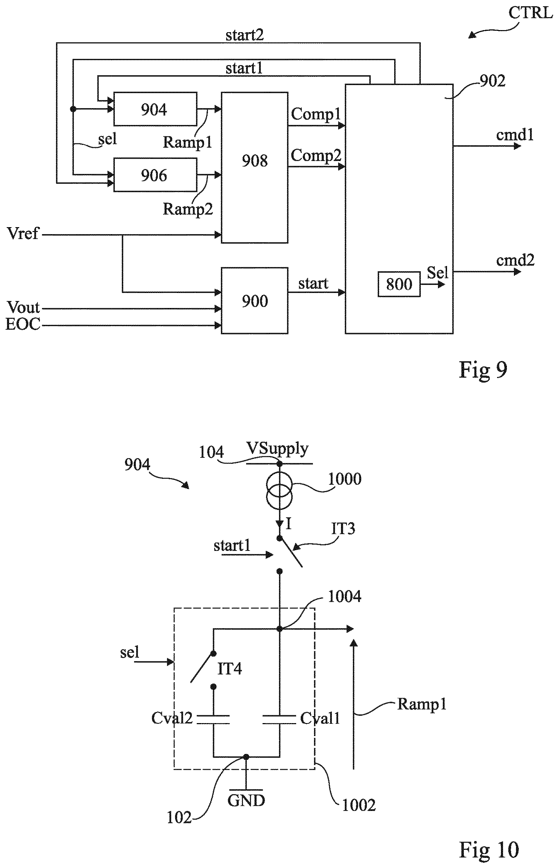

La figure 9 représente un exemple plus détaillé de mode de réalisation du convertisseur 1 de la figure 1, seul le circuit CTRL du convertisseur 1 étant représenté en figure 9.

Le circuit CTRL reçoit le potentiel Vout, le potentiel Vref, et, de préférence, le signal EOC.

Le circuit CTRL comprend un circuit 900 configuré pour recevoir les potentiels Vref et Vout, et, de préférence, le signal EOC. Le circuit 900 est configuré pour fournir un signal start dont l'état, par exemple une commutation d'un état bas à un état haut, indique que le circuit CTRL doit commander une impulsion de courant IL dans l'élément L (figure 1).

Le circuit CTRL comprend un circuit numérique 902, par exemple une machine d'états, recevant le signal start et fournissant les signaux cmd1 et cmd2.

Le circuit 902 est configuré pour fournir un signal indiquant quelle valeur val1 ou val2 est sélectionnée comme valeur valmax courante des impulsions de courant IL, par exemple le signal Sel. A titre d'exemple, le circuit 902 comprend le circuit 800 de la figure 8 pour générer le signal Sel.

Dans ce mode de réalisation, les durées des états passants des interrupteurs IT1 et IT2 sont déterminées par des comparaisons de rampe de tension avec un ou des potentiels déterminés par la valeur de consigne du potentiel Vout. A titre d'exemple, le circuit CTRL comprend un circuit 904 configuré pour fournir des rampes de tension Ramp1, et un circuit 906 configuré pour fournir des rampes de tension Ramp2.

Lorsque le circuit 902, et, plus généralement, le circuit CTRL, doit commander une impulsion de courant IL dans l'élément L, le circuit 902 commande le début d'une rampe de tension Ramp1, par exemple au moyen d'un signal start1 qu'il fournit au générateur 904 de rampes de tension Ramp1.

Un circuit 908 du circuit CTRL compare la rampe de tension Ramp1 avec un potentiel, par exemple le potentiel Vref, déterminé par la valeur de consigne du potentiel Vout. Le circuit 908 fournit le résultat de cette comparaison au circuit 902, par exemple sous la forme d'un signal Comp1. Par exemple, la rampe Ramp1 est croissante à partir d'une valeur nulle, et le signal Comp1 est à l'état bas tant que la rampe Ramp1 est inférieure au potentiel Vref, puis commute à l'état haut lorsque la rampe Ramp1 devient supérieure au potentiel Vref. A titre d'exemple, le circuit 902 commute le signal cmd1 au début de la rampe Ramp1, et le commute de nouveau lorsque la rampe Ramp1 devient supérieure au potentiel Vref. Ainsi, la pente de la rampe Ramp1 détermine, avec le potentiel Vref, la durée d'état passant de l'interrupteur IT1, donc la valeur maximale valmax des impulsions de courant IL.

Dans ce mode de réalisation, le générateur de rampe 904 est donc configuré pour recevoir le signal Sel et pour modifier la pente des rampes de tension Ramp1 qu'il fournit sur la base du signal Sel.

Par ailleurs, lorsque le circuit 902 commute le signal cmd1 pour commuter l'interrupteur IT1 à l'état bloqué, il commande simultanément le début d'une rampe de tension Ramp2, par exemple, grâce à un signal start2 qu'il fournit au générateur 906 de rampe de tension Ramp2.

Le circuit 908 du circuit CTRL compare la rampe de tension Ramp2 avec un potentiel déterminé par la valeur de consigne du potentiel Vout. Par exemple, la rampe Ramp2 est comparée avec le potentiel Vref lorsque la rampe Ramp2 est croissante à partir d'une valeur nulle, ou avec un potentiel égal au potentiel Vsupply moins le potentiel Vref lorsque la rampe Ramp2 est décroissante à partir du potentiel Vsupply.

Le circuit 908 fournit le résultat de cette comparaison au circuit 902, par exemple sous la forme d'un signal Comp2. Par exemple, la rampe Ramp2 est croissante à partir d'une valeur nulle, et le signal Comp2 est à l'état bas tant que la rampe Ramp2 est inférieure au potentiel Vref, puis commute à l'état haut lorsque la rampe Ramp2 devient supérieure au potentiel Vref. A titre d'exemple, le circuit 902 commute le signal cmd2 au début de la rampe Ramp2, et le commute de nouveau lorsque la rampe Ramp2 devient supérieure au potentiel Vref. Ainsi, la pente de la rampe Ramp2 détermine, avec le potentiel Vref, la durée d'état passant de l'interrupteur IT2.

Pour que le courant IL soit nul à la fin de l'état passant de l'interrupteur IT2, la durée de l'état passant de l'interrupteur IT2 doit être adaptée en fonction de la valeur val1 ou val2 sélectionnée comme valeur valmax. Dans ce mode de réalisation, le générateur de rampe 906 est donc configuré pour recevoir le signal Sel et pour modifier la pente des rampes de tension Ramp2 qu'il fournit, sur la base du signal Sel.

La figure 10 représente un exemple de mode de réalisation d'un générateur de rampe du convertisseur de la figure 9, par exemple du générateur de rampe 904. La personne du métier est en mesure de déduire un exemple de mode de réalisation correspondant du générateur de rampe 906 à partir de la description faite ci-dessous du générateur de rampe 904.

Le générateur de rampe 904 comprend une source de courant 1000, un interrupteur IT3, et une capacité 1002 à valeur commandable. La source de courant 1000 et l'interrupteur IT3 sont connectés en série entre le noeud 104 recevant le potentiel Vsupply et une électrode 1004 de la capacité 1002, l'autre électrode de la capacité 1002 étant connectée au noeud 102 recevant le potentiel de référence GND. La rampe de tension Ramp1 est disponible aux bornes de la capacité 1002, ou, dit autrement, sur la borne 1004 de la capacité 1002.

La source de courant 1000 est configurée pour fournir un courant I de charge de la capacité 1002. De préférence, le courant I est proportionnel à (Vsupply-Vout) ou à (Vsupply-Vref), de sorte que la durée d'état passant de l'interrupteur IT1 soit indépendante de la valeur du potentiel d'alimentation Vsupply.

L'interrupteur IT3 est commandé par le signal start1. Plus particulièrement, lorsque le circuit 902 (figure 9) commande le début d'une rampe Ramp1 avec le signal start1, l'interrupteur IT3 est configuré pour commuter à l'état passant, d'où il résulte que la capacité 1002 se charge et que la rampe de tension Ramp1 est disponible à ses bornes.

Bien que cela ne soit pas illustré en figue 10, un dispositif de remise à zéro de la rampe Ramp1, par exemple un dispositif de décharge de la capacité 1002 tel qu'un interrupteur connecté en parallèle de la capacité 1002, est prévu dans le générateur de rampe 904, ce dispositif étant, par exemple, commandé par le signal start1.

Dans ce mode de réalisation, la valeur de la capacité 1002 est commandée par le signal Sel. Lorsque le signal Sel indique que la valeur valmax est égale à la valeur val1, la capacité 1002 a une première valeur C1, et, lorsque le signal Sel indique que la valeur valmax est égale à la valeur val2, la capacité 1002 a une deuxième valeur C2. Dans cet exemple où la valeur val2 est supérieure à la valeur val1, la valeur C1 est inférieure à la valeur C2. Ainsi, la pente de la rampe Ramp1 est plus importante que lorsque la capacité 1002 est à la valeur C1 que lorsque la capacité 1002 est à la valeur C2, d'où il résulte que la durée d'état passant de l'interrupteur IT1 est plus faible quand la capacité 1002 a la valeur C1 que quand la capacité 1002 a la valeur C2.

A titre d'exemple, la capacité 1002 comprend une capacité Cval1 ayant une première électrode correspondant à l'électrode 1004 de la capacité 1002, et une deuxième électrode connectée au noeud 102. La capacité Cval1 a la valeur C1. En outre, la capacité 1002 comprend un interrupteur IT4 en série avec une capacité Cval2 entre le noeud 102 et l'électrode 1004 de la capacité 1002. L'association en série de la capacité Cval2 et de l'interrupteur IT4 est donc connectée en parallèle de la capacité Cval1. La capacité Cval2 a une valeur telle que, lorsque l'interrupteur IT4, commandé par le signal Sel, est passant, la capacité 1002 a la valeur C2. Dans ce cas, l'interrupteur IT4 est passant lorsque la valeur val2 est sélectionnée, et bloqué sinon.

Bien que l'on ait décrit un mode de réalisation plus détaillé d'un générateur de rampe en relation avec la figure 10, la personne du métier est en mesure de prévoir des modes de réalisation des générateurs de rampe 904 et 906 différents de ceux décrits, mais permettant la mise en œuvre du procédé décrit en relation avec les figures 2 à 6.

Plus généralement, on a décrit en relation avec la figure 9 un mode de réalisation plus détaillé du circuit CTRL dans lequel les durées des états passants des interrupteurs IT1 et IT2 sont déterminées par des comparaisons de rampe de tension avec un ou des potentiels déterminés par la valeur de consigne du potentiel Vout. La personne du métier est en mesure de prévoir d'autres modes de réalisation du circuit CTRL dans lesquels les durées des états passants des interrupteurs IT1 et IT2 sont déterminées différemment, par exemple avec un oscillateur commandé en tension ("Voltage Controlled Oscillator" en anglais - VCO), et sont modifiées lorsque la valeur sélectionnée comme valeur maximale valmax est modifiée, ces durées d'états passants augmentant, respectivement diminuant, lorsque la valeur valmax augmente, respectivement diminue.

En outre, dans les exemples de modes de réalisation, de modes de mise en œuvre et variantes décrits précédemment en relation avec les figures 1 à 10, la valeur maximale valmax des impulsions de courant IL est sélectionnée parmi uniquement les deux valeurs val1 et val2. Toutefois, dans d'autres modes de réalisation, la valeur valmax est sélectionnée parmi un nombre de valeurs quelconque supérieur à deux. La mise en œuvre de ces modes de réalisation est à la portée de la personne du métier à partir des indications fonctionnelles données ci-dessus.

Par exemple, la valeur valmax peut être sélectionnée parmi la valeur val1, la valeur val2, et une valeur supplémentaire val3. A titre d'exemple, la valeur val3 est supérieure à la valeur val2.

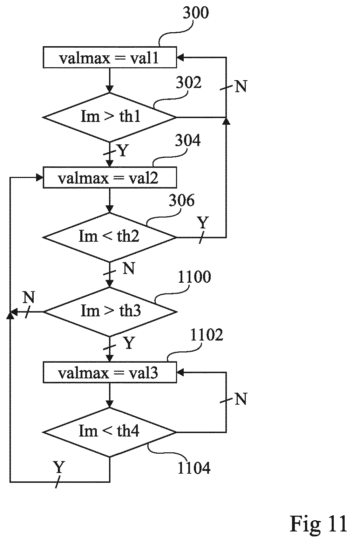

La figure 11 représente, sous la forme d'un organigramme, une variante de réalisation du procédé des figures 2 à 4, dans le cas où la valeur valmax est sélectionnée parmi trois valeurs val1, val2 et val3. Le procédé de la figure 11 est, par exemple, mis en œuvre par le circuit CTRL.

Par rapport au procédé de la figure 3, le procédé de la figure 11 comprend en outre :
- la sélection de la valeur val3 comme valeur maximale valmax des impulsions de courant lorsque le courant moyen Im est supérieur à un seuil th3 supérieur au seuil th1 ; et
- la sélection de la valeur val2 lorsque le courant moyen Im est inférieur à un seuil th4 supérieur au seuil th1 et inférieur ou égal au seuil th3. De préférence, le seuil th4 est inférieur (c'est-à-dire ici strictement inférieur) au seuil th3, de sorte qu'une hystérésis est mise en œuvre lors des commutations de la valeur valmax entre les valeurs val2 et val3.

Ainsi, le procédé de la figure 11 comprend les étapes 300, 302, 304 et 306 décrites en relation avec la figure 3, qui ne seront donc pas détaillées de nouveau ici, et comprend, en outre, des étapes 1100, 1102 et 1104. Contrairement à ce qui a été décrit en relation avec la figure 3, à l'étape 306, lorsque le courant moyen Im est inférieur au seuil th2 (sortie N de l'étape 306), le procédé se poursuit à l'étape 1100 (bloc "Im > th3") consistant à vérifier si le courant Im est supérieur au seuil th3.

Si le courant Im est inférieur au seuil th3 (sortie N de l'étape 1100), le procédé se poursuit à l'étape 304 et la valeur valmax reste égale à la valeur val2.

Si le courant Im est supérieur au seuil th3 (sortie Y de l'étape 1100), le procédé se poursuit à l'étape 1102 (bloc "valmax = val3").

A l'étape 1102, la valeur valmax devient égale à la valeur val3, ou, dit autrement, le circuit CTRL sélectionne la valeur val3 comme valeur maximale valmax courante. Dit encore autrement, la valeur valmax commute de la valeur val2 à la valeur val3.

L'étape 1102 est suivie par l'étape 1104 (bloc "Im < th4") lors de laquelle le circuit CTRL compare le courant Im au seuil th4.

Si le courant Im est supérieur au seuil th4 (sortie N de l'étape 1104), le procédé se poursuit à l'étape 1102 et la valeur valmax reste égale à la valeur val3.

Si le courant Im est inférieur au seuil th4 (sortie Y de l'étape 1104), le procédé se poursuit à l'étape 304 lors de laquelle la valeur valmax devient égale à la valeur val2, c'est-à-dire commute de la valeur val3 à la valeur val2.

Bien que l'on ait décrit en relation avec la figure 11 le cas où le seuil th4 est inférieur au seuil th3, la personne du métier est en mesure d'adapter le procédé ci-dessus au cas où les seuils th3 et th4 sont égaux.

A titre d'exemple, l'étape 1100 peut être mise en œuvre de manière similaire à ce qui a été décrit en relation avec la figure 5. Dans ce cas, l'étape 1100, qui est mise en œuvre alors que la valeur valmax courante est égale à la valeur val2, comprend :
- à la fin de chaque impulsion de courant IL, déclencher, par exemple par le circuit CTRL, une temporisation temp3 représentative du seuil th3 ; et
- sélectionner la valeur val3, par exemple par le circuit CTRL, si un début de l'impulsion de courant IL suivante se produit pendant la temporisation temp3 (sortie Y de l'étape 1100). En revanche, si le début de l'impulsion de courant IL suivante se produit alors que la temporisation est terminée (sortie N de l'étape 1100), le procédé se poursuit à l'étape 306 et la valeur valmax reste égale à la valeur val2.

De manière similaire, l'étape 1104 est par exemple mise en œuvre de manière similaire à ce qui a été décrit en relation avec la figure 6. Dans ce cas, l'étape 1104, qui est mise en œuvre alors que la valeur valmax est égale à la valeur val3, comprend :
- à la fin de chaque impulsion de courant IL, déclencher, par exemple par le circuit CTRL, une temporisation temp4 représentative du seuil th4 ; et
- sélectionner la valeur val2, par exemple par le circuit CTRL, si un début de l'impulsion de courant IL suivante se produit alors que la temporisation temp4 est terminée (sortie Y de l'étape 1104). En revanche, si le début de l'impulsion de courant IL suivante se produit pendant la temporisation temp4 (sortie N de l'étape 1104), le procédé se poursuit à l'étape 1102 et la valeur valmax reste égale à la valeur val3.

L'adaptation de la description des figures 1 à 10 au procédé de la figure 11 est à la portée de la personne du métier.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. On a décrit des modes de réalisation dans lesquels la valeur valmax est sélectionnée parmi uniquement deux valeurs discrètes val1 et val2, ou parmi uniquement trois valeurs discrètes val1, val2 et val3. La personne du métier saura adapter ces modes de réalisation au cas où la valeur valmax est sélectionnée uniquement parmi une pluralité de valeurs discrètes comprenant les valeurs val1 et val2, ou uniquement parmi une pluralité de valeurs discrètes comprenant les valeurs val1, val2 et val3.

Enfin, la mise en oeuvre pratique des modes de réalisation et variantes décrits est à la portée de la personne du métier à partir des indications fonctionnelles données ci-dessus. En particulier, la personne du métier est en mesure de déterminer les valeurs que peut prendre la valeur maximale valmax des impulsions de courant IL, les valeurs des seuils correspondant, et, lorsque le courant Im est estimé par le délai entre deux impulsions de courant IL successives, les durées de temporisation représentative de ces seuils.

## Revendications

1. Convertisseur abaisseur DC-DC à découpage comprenant :
un premier interrupteur (IT1) connecté entre un noeud (104) configuré pour recevoir un potentiel d'alimentation (Vsupply) et un noeud interne (106) ;
un deuxième interrupteur (IT2) connecté entre le noeud interne (106) et un noeud (102) configuré pour recevoir un potentiel de référence (GND) ;
un élément inductif (L) couplant le noeud interne (106) à un noeud de sortie (108) du convertisseur (1) ; et
un circuit de commande (CTRL) configuré pour :
commander les premier et deuxième interrupteurs (IT1, IT2) de sorte que des impulsions de courant (IL) dans l'élément inductif (L) aient une valeur maximale (valmax) sélectionnée sur la base d'un courant moyen (Im) tiré sur le noeud de sortie (108), parmi uniquement des valeurs discrètes comprenant au moins une première valeur (val1) et une deuxième valeur (val2), et
commander le début d'une impulsion de courant (IL) dans l'élément inductif (L) seulement si un potentiel du noeud de sortie (108) est en-dessous d'un seuil et le courant (IL) dans l'élément inductif est nul,
dans lequel, pour chaque valeur discrète sélectionnée, le courant moyen (Im) tiré par la charge est estimé, pour cette valeur discrète sélectionnée, par un délai entre chaque deux impulsions successives, le délai débutant avec la fin de la première des deux impulsions successives et se terminant avec le début de la deuxième des deux impulsions successives, et étant déterminé à partir des signaux de commande des interrupteurs de côté haut et de côté bas du convertisseur.

2. Procédé de commande comprenant :
sélectionner, par un circuit de commande (CTRL) et parmi uniquement des valeurs discrètes comprenant au moins une première valeur (val1) et une deuxième valeur (val2), une valeur maximale (valmax) d'impulsions de courant (IL) dans un élément inductif (L) couplant un noeud interne (106) d'un convertisseur abaisseur DC-DC à découpage (1) à un noeud de sortie (108) du convertisseur, la sélection s'effectuant sur la base d'un courant moyen (Im) tiré sur le noeud de sortie (108) ; et
commander, par le circuit de commande (CTRL), un premier interrupteur (IT1) connecté entre un noeud (104) recevant un potentiel d'alimentation (Vsupply) et le noeud interne (106), et un deuxième interrupteur (IT2) connecté entre le noeud interne (106) et un noeud (102) recevant un potentiel de référence (GND), de sorte que la valeur maximale (valmax) des impulsions de courant (IL) soit égale à la valeur (val1, val2) sélectionnée, le circuit de commande (CTRL) commandant le début d'une impulsion de courant (IL) dans l'élément inductif (L) seulement si un potentiel du noeud de sortie (108) est en-dessous d'un seuil et le courant (IL) dans l'élément inductif est nul,
dans lequel, pour chaque valeur discrète sélectionnée, le courant moyen (Im) tiré par la charge est estimé, pour cette valeur discrète sélectionnée, par un délai entre chaque deux impulsions successives, le délai débutant avec la fin de la première des deux impulsions successives et se terminant avec le début de la deuxième des deux impulsions successives, et étant déterminé à partir des signaux de commande des interrupteurs de côté haut et de côté bas du convertisseur.

3. Convertisseur selon la revendication 1 ou procédé selon la revendication 2, dans lequel le convertisseur comprend en outre un circuit (112) configuré pour fournir au circuit de commande (CTRL) un signal (EOC) indiquant quand le courant dans l'élément inductif est nul.

4. Convertisseur selon la revendication 1 ou 3, ou procédé selon la revendication 2 ou 3, dans lequel le circuit de commande (CTRL) est configuré pour sélectionner la valeur maximale (valmax) parmi au moins la première valeur (val1) et la deuxième valeur (val2) de sorte que ladite valeur maximale (valmax) augmente lorsque le courant moyen (Im) augmente, et diminue lorsque le courant moyen (Im) diminue.

5. Convertisseur selon l'une quelconque des revendications 1, 3 et 4, ou procédé selon l'une quelconque des revendications 2 à 4, dans lequel :
la première valeur (val1) est inférieure à la deuxième valeur (val2) ;
le circuit de commande (CTRL) sélectionne (304) la deuxième valeur (val2) lorsque le courant moyen (Im) est supérieur à un premier seuil (th1) ; et
le circuit de commande (CTRL) sélectionne la première valeur (val1) lorsque le courant moyen (Im) est inférieur à un deuxième seuil (th2) inférieur ou égal au premier seuil (th1).

6. Convertisseur ou procédé selon la revendication 5, dans lequel le deuxième seuil (th2) est inférieur au premier seuil (th1).

7. Convertisseur ou procédé selon la revendication 5 ou 6, dans lequel, lorsque la première valeur (val1)est sélectionnée :
- à la fin de chaque impulsion de courant (IL) le circuit de commande (CTRL) déclenche (502) une première temporisation (temp1) représentative du premier seuil (th1) ; et
- le circuit de commande (CTRL) sélectionne (304) la deuxième valeur (val2) si un début de l'impulsion de courant (IL) suivante se produit pendant ladite première temporisation (temp1),
et dans lequel, lorsque la deuxième valeur (val2) est sélectionnée :
- à la fin de chaque impulsion de courant (IL) le circuit de commande (CTRL) déclenche (602) une deuxième temporisation (temp2) représentative du deuxième seuil (th2) ; et
- le circuit de commande (CTRL) sélectionne (300) la première valeur (val1) si un début de l'impulsion de courant (IL) suivante se produit après ladite deuxième temporisation (temp2).

8. Convertisseur ou procédé selon la revendication 7, dans lequel une durée de chaque première temporisation (temp1) est inférieure à une durée de chaque deuxième temporisation (temp2).

9. Convertisseur ou procédé selon l'une quelconque des revendications 5 à 8, dans lequel la valeur maximale (valmax) est sélectionnée parmi au moins la première valeur (val1), la deuxième valeur (val2) et une troisième valeur supérieure à la deuxième valeur (val2).

10. Convertisseur ou procédé selon la revendication 9, dans lequel :
le circuit de commande (CTRL) sélectionne (1102) la troisième valeur lorsque le courant moyen (Im) est supérieur à un troisième seuil supérieur au premier seuil (th1) ; et
le circuit de commande sélectionne (306) la deuxième valeur (val2) lorsque le courant moyen (Im) est inférieur à un quatrième seuil supérieur au premier seuil (th1) et inférieur ou égal au troisième seuil, de préférence inférieur au troisième seuil.

11. Convertisseur ou procédé selon la revendication 10 prise dans sa dépendance à la revendication 7, dans lequel :
lorsque la deuxième valeur (val2) est sélectionnée :
- à la fin de chaque impulsion de courant (IL) le circuit de commande (CTRL) déclenche en outre une troisième temporisation représentative du troisième seuil ; et
- le circuit de commande (CTRL) sélectionne (1102) la troisième valeur si un début de l'impulsion de courant (IL) suivante se produit pendant ladite troisième temporisation, et dans lequel, lorsque la troisième valeur est sélectionnée :
- à la fin de chaque impulsion de courant (IL) le circuit de commande (CTRL) déclenche une quatrième temporisation représentative du quatrième seuil ; et
- le circuit de commande (CTRL) sélectionne (306) la deuxième valeur (val2) si un début de l'impulsion de courant (IL) suivante se produit après ladite quatrième temporisation.

12. Convertisseur ou procédé selon l'une quelconque des revendications 7 à 11, dans lequel la fin de chaque impulsion de courant (IL) correspond à une ouverture du deuxième interrupteur (IT2) alors que le premier interrupteur (IT1) est ouvert, et le début de chaque impulsion de courant (IL) correspond à une fermeture du premier interrupteur (IT1) alors que le deuxième interrupteur (IT2) est ouvert.

13. Convertisseur selon l'une quelconque des revendications 1 et 3 à 12, ou procédé selon l'une quelconque des revendications 2 à 12, dans lequel les premier et deuxième interrupteurs (IT1, IT2) sont commandés en modulation de fréquence d'impulsion, PFM.

14. Convertisseur selon l'une quelconque des revendications 1 et 3 à 13, ou procédé selon l'une quelconque des revendications 2 à 13, dans lequel, à chaque impulsion de courant (IL), une durée de l'état passant du premier interrupteur (IT1) est déterminée par une comparaison d'une première rampe de tension (Ramp1) avec un premier potentiel (Vref) déterminé par une valeur de consigne d'un potentiel (Vout) de sortie du convertisseur (1), et une durée de l'état passant du deuxième interrupteur (IT2) est déterminée par une comparaison d'une deuxième rampe de tension (Ramp2) avec un deuxième potentiel (Vref) déterminé par la valeur de consigne, les pentes des première et deuxième rampes de tension étant différentes selon la valeur (val1, val2) sélectionnée comme valeur maximale (valmax).

## Patentansprüche

1. Ein getakteter Abwärtswandler, bzw. Buck-Converter, der Folgendes aufweist:
einen ersten Schalter (IT1), der zwischen einem Knoten (104), der eingerichtet ist zum Empfangen eines Versorgungspotenzials (Vsupply), und einem internen Knoten (106) angeschlossen ist;
einen zweiten Schalter (IT2), der zwischen dem internen Knoten (106) und einem Knoten (102), der eingerichtet ist zum Empfangen eines Referenzpotenzials (GND), angeschlossen ist;
ein induktives Element (L), das den internen Knoten (106) mit einem Ausgangsknoten (108) des Wandlers (1) koppelt; und
eine Steuer-Schaltung (CTRL), die eingerichtet ist zum:
Steuern des ersten und zweiten Schalters (IT1, IT2), sodass Stromimpulse (IL) in dem induktiven Element (L) einen maximalen Wert (valmax) aufweisen, der basierend auf einem mittleren Strom (Im), der von dem Ausgangsknoten (108) entnommen wird, aus ausschließlich diskreten Werten ausgewählt wird, die wenigstens einen ersten Wert (val1) und einen zweiten Wert (val2) aufweisen, und
Steuern des Beginns eines Stromimpulses (IL) in dem induktiven Element (L) nur dann, wenn ein Potenzial des Ausgangsknotens (108) unterhalb eines Schwellenwerts liegt und der Strom (IL) in dem induktiven Element null ist,
wobei für jeden ausgewählten diskreten Wert der mittlere Strom (Im), der von der Last entnommen wird, für diesen ausgewählten diskreten Wert durch eine Verzögerung zwischen je zwei aufeinanderfolgenden Impulsen geschätzt wird, wobei die Verzögerung mit dem Ende des ersten der zwei aufeinanderfolgenden Impulse beginnt und mit dem Beginn des zweiten der zwei aufeinanderfolgenden Impulse endet und anhand der Steuersignale der High-Side- und Low-Side-Schalter des Wandlers bestimmt wird.

2. Ein Steuerungsverfahren, das Folgendes aufweist:
Auswählen, mit einer Steuer-Schaltung (CTRL) und aus ausschließlich diskreten Werten, die wenigstens einen ersten Wert (val1) und einen zweiten Wert (val2) aufweisen, eines maximalen Werts (valmax) von Stromimpulsen (IL) in einem induktiven Element (L), das einen internen Knoten (106) eines getakteten Abwärtswandlers (1) mit einem Ausgangsknoten (108) des Wandlers koppelt, wobei die Auswahl basierend auf einem mittleren Strom (Im) getroffen wird, der von dem Ausgangsknoten (108) entnommen wird; und
Steuern, über die Steuer-Schaltung (CTRL), eines ersten Schalters (IT1), der zwischen einem Knoten (104), der ein Versorgungspotenzial (Vsupply) empfängt, und dem internen Knoten (106) angeschlossen ist, und eines zweiten Schalters (IT2), der zwischen dem internen Knoten (106) und einem Knoten (102), der ein Referenzpotenzial (GND) empfängt, angeschlossen ist, sodass der maximale Wert (valmax) der Stromimpulse (IL) gleich dem ausgewählten Wert (val1, val2) ist, wobei die Steuer-Schaltung (CTRL) den Beginn eines Stromimpulses (IL) in dem induktiven Element (L) nur dann steuert, wenn ein Potenzial des Ausgangsknotens (108) unterhalb eines Schwellenwerts liegt und der Strom (IL) in dem induktiven Element null ist,
wobei für jeden ausgewählten diskreten Wert der mittlere Strom (Im), der von der Last entnommen wird, für diesen ausgewählten diskreten Wert durch eine Verzögerung zwischen je zwei aufeinanderfolgenden Impulsen geschätzt wird, wobei die Verzögerung mit dem Ende des ersten der zwei aufeinanderfolgenden Impulse beginnt und mit dem Beginn des zweiten der zwei aufeinanderfolgenden Impulse endet und anhand der Steuersignale der High-Side- und Low-Side-Schalter des Wandlers bestimmt wird.

3. Wandler nach Anspruch 1 oder Verfahren nach Anspruch 2, wobei der Wandler ferner eine Schaltung (112) aufweist, die eingerichtet ist zum Versorgen der Steuer-Schaltung (CTRL) mit einem Signal (EOC), das anzeigt, wenn der Strom in dem induktiven Element null ist.

4. Wandler nach Anspruch 1 oder 3, oder Verfahren nach Anspruch 2 oder 3, wobei die Steuer-Schaltung (CTRL) eingerichtet ist zum Auswählen des maximalen Werts (valmax) aus wenigstens dem ersten Wert (val1) und dem zweiten Wert (val2), sodass der maximale Wert (valmax) zunimmt, wenn der mittlere Strom (Im) zunimmt, und abnimmt, wenn der mittlere Strom (Im) abnimmt.

5. Wandler nach einem der Ansprüche 1, 3 und 4, oder Verfahren nach einem der Ansprüche 2 bis 4, wobei:
der erste Wert (val1) kleiner als der zweite Wert (val2) ist;
die Steuer-Schaltung (CTRL) den zweiten Wert (val2) auswählt (304),
wenn der mittlere Strom (Im) höher als ein erster Schwellenwert (th1) ist; und
die Steuer-Schaltung (CTRL) den ersten Wert (val1) auswählt, wenn der mittlere Strom (Im) niedriger als ein zweiter Schwellenwert (th2) ist, der niedriger als oder gleich dem ersten Schwellenwert (th1) ist.

6. Wandler oder Verfahren nach Anspruch 5, wobei der zweite Schwellenwert (th2) niedriger als der erste Schwellenwert (th1) ist.

7. Wandler oder Verfahren nach Anspruch 5 oder 6, wobei, wenn der erste Wert (val1) ausgewählt ist:
- am Ende jedes Stromimpulses (IL) die Steuer-Schaltung (CTRL) eine erste Zeitverzögerung (temp1) auslöst (502), die den ersten Schwellenwert (th1) repräsentiert; und
- die Steuer-Schaltung (CTRL) den zweiten Wert (val2) auswählt (304), wenn ein Beginn des nächsten Stromimpulses (IL) während der ersten Zeitverzögerung (temp1) auftritt,
und wobei, wenn der zweite Wert (val2) ausgewählt ist:
- am Ende jedes Stromimpulses (IL) die Steuer-Schaltung (CTRL) eine zweite Zeitverzögerung (temp2) auslöst (602), die den zweiten Schwellenwert (th2) repräsentiert; und
- die Steuer-Schaltung (CTRL) den ersten Wert (val1) auswählt (300), wenn ein Beginn des nächsten Stromimpulses (IL) nach der zweiten Zeitverzögerung (temp2) auftritt.

8. Wandler oder Verfahren nach Anspruch 7, wobei eine Dauer jeder ersten Zeitverzögerung (temp1) kürzer als eine Dauer jeder zweiten Zeitverzögerung (temp2) ist.

9. Wandler oder Verfahren nach einem der Ansprüche 5 bis 8, wobei der maximale Wert (valmax) aus wenigstens dem ersten Wert (val1), dem zweiten Wert (val2) und einem dritten Wert, der größer als der zweite Wert (val2) ist, ausgewählt wird.

10. Wandler oder Verfahren nach Anspruch 9, wobei:
die Steuer-Schaltung (CTRL) den dritten Wert auswählt (1102), wenn der mittlere Strom (Im) höher als ein dritter Schwellenwert ist, der höher als der erste Schwellenwert (th1) ist; und
die Steuer-Schaltung den zweiten Wert (val2) auswählt (306), wenn der mittlere Strom (Im) niedriger als ein vierter Schwellenwert ist, der höher als der erste Schwellenwert (th1) und niedriger als oder gleich dem dritten Schwellenwert ist, vorzugsweise niedriger als der dritte Schwellenwert.

11. Wandler oder Verfahren nach Anspruch 10 in Abhängigkeit von Anspruch 7, wobei:
wenn der zweite Wert (val2) ausgewählt ist:
- am Ende jedes Stromimpulses (IL) die Steuer-Schaltung (CTRL) ferner eine dritte Zeitverzögerung auslöst, die den dritten Schwellenwert repräsentiert; und
- die Steuer-Schaltung (CTRL) den dritten Wert auswählt (1102), wenn ein Beginn des nächsten Stromimpulses (IL) während der dritten Zeitverzögerung auftritt,
und wobei, wenn der dritte Wert ausgewählt ist:
- am Ende jedes Stromimpulses (IL) die Steuer-Schaltung (CTRL) eine vierte Zeitverzögerung auslöst, die den vierten Schwellenwert repräsentiert; und
- die Steuer-Schaltung (CTRL) den zweiten Wert (val2) auswählt (306), wenn ein Beginn des nächsten Stromimpulses (IL) nach der vierten Zeitverzögerung auftritt.

12. Wandler oder Verfahren nach einem der Ansprüche 7 bis 11, wobei das Ende jedes Stromimpulses (IL) einem Abschalten des zweiten Schalters (IT2) entspricht, während der erste Schalter (IT1) ausgeschaltet ist, und der Beginn jedes Stromimpulses (IL) einem Einschalten des ersten Schalters (IT1) entspricht, während der zweite Schalter (IT2) ausgeschaltet ist.

13. Wandler nach einem der Ansprüche 1 und 3 bis 12, oder Verfahren nach einem der Ansprüche 2 bis 12, wobei der erste und der zweite Schalter (IT1, IT2) in Pulsfrequenzmodulation, PFM, gesteuert werden.

14. Wandler nach einem der Ansprüche 1 und 3 bis 13, oder Verfahren nach einem der Ansprüche 2 bis 13, wobei bei jedem Stromimpuls (IL) eine Dauer des Einschaltzustands des ersten Schalters (IT1) durch einen Vergleich einer ersten Spannungsrampe (Ramp1) mit einem ersten Potenzial (Vref) bestimmt wird, das durch einen Sollwert eines Ausgangspotenzials (Vout) des Wandlers (1) bestimmt wird, und eine Dauer des Einschaltzustands des zweiten Schalters (IT2) durch einen Vergleich einer zweiten Spannungsrampe (Ramp2) mit einem zweiten Potenzial (Vref) bestimmt wird, das durch den Sollwert bestimmt wird, wobei die Steigungen der ersten und zweiten Spannungsrampen je nach dem als maximaler Wert (valmax) ausgewählten Wert (val1, val2) unterschiedlich sind.

## Claims

1. Switched-mode power supply buck converter comprising:
a first switch (IT1) connected between a node (104) configured to receive a power supply potential (Vsupply) and an internal node (106);
a second switch (IT2) connected between the internal node (106) and a node (102) configured to receive a reference potential (GND);
an inductive element (L) coupling the internal node (106) to an output node (108) of the converter (1); and
a control circuit (CTRL) configured to:
control the first and second switches (IT1, IT2) so that current pulses (IL) in the inductive element (L) have a maximum value (valmax) selected based on a mean current (Im) drawn from the output node (108), from among only discrete values comprising at least a first value (vall) and a second value (val2), and
control the beginning of a current pulse (IL) in the inductive element (L) only if a potential of the output node (108) is below a threshold and the current (IL) in the inductive element is zero,
wherein, for each selected discrete value, the mean current (Im) drawn by the load is estimated, for this selected discrete value, by a delay between each two successive pulses, the delay beginning with the end of the first of the two successive pulses and ending with the beginning of the second of the two successive pulses, and being determined from the control signals the high-side and low-side switches of the converter.

2. Control method comprising:
selecting, with a control circuit (CTRL) and from among only discrete values comprising at least a first value (vall) and a second value (val2), a maximum value (valmax) of current pulses (IL) in an inductive element (L) coupling an internal node (106) of a switched-mode power supply buck converter (1) to an output node (108) of the converter, the selection being made based on a mean current (Im) drawn from the output node (108); and
controlling, via the control circuit (CTRL), a first switch (IT1) connected between a node (104) receiving a power supply potential (Vsupply) and the internal node (106), and a second switch (IT2) connected between the internal node (106) and a node (102) receiving a reference potential (GND), so that the maximum value (valmax) of the current pulses (IL) is equal to the selected value (val1, val2), the control circuit (CTRL) controlling the beginning of a current pulse (IL) in the inductive element (L) only if a potential of the output node (108) is below a threshold and the current (IL) in the inductive element is zero,
wherein, for each selected discrete value, the mean current (Im) drawn by the load is estimated, for this selected discrete value, by a delay between each two successive pulses, the delay starting with the end of the first of the two successive pulses and ending with the beginning of the second of the two successive pulses, and being determined from the control signals of the high-side and low-side switches of the converter.

3. Converter according to claim 1 or method according to claim 2, wherein the converter further comprises a circuit (112) configured to supply the control circuit (CTRL) with a signal (EOC) indicating when the current in the inductive element is zero.

4. Converter according to claim 1 or 3, or method according to claim 2 or 3, wherein the control circuit (CTRL) is configured to select the maximum value (valmax) from among at least the first value (vall) and the second value (val2) so that said maximum value (valmax) increases as the mean current (Im) increases, and decreases as the mean current (Im) decreases.

5. Converter according to any of claims 1, 3, and 4, or method according to any of claims 2 to 4, wherein:
the first value (vall) is smaller than the second value (val2);
the control circuit (CTRL) selects (304) the second value (val2) when the mean current (Im) is higher than a first threshold (th1); and
the control circuit (CTRL) selects the first value (vall) when the mean current (Im) is lower than a second threshold (th2) lower than or equal to the first threshold (th1).

6. Converter or method according to claim 5, wherein the second threshold (th2) is lower than the first threshold (th1).

7. Converter or method according to claim 5 or 6, wherein, when the first value (vall) is selected:
- at the end of each current pulse (IL), the control circuit (CTRL) triggers (502) a first time delay (temp1) representative of the first threshold (th1); and
- the control circuit (CTRL) selects (304) the second value (val2) if a beginning of the next current pulse (IL) occurs during said first time delay (temp1),
and wherein, when the second value (val2) is selected:
- at the end of each current pulse (IL), the control circuit (CTRL) triggers (602) a second time delay (temp2) representative of the second threshold (th2); and
- the control circuit (CTRL) selects (300) the first value (vall) if a beginning of the next current pulse (IL) occurs after said second time delay (temp2).

8. Converter or method according to claim 7, wherein a duration of each first time delay (temp1) is shorter than a duration of each second time delay (temp2).

9. Converter or method according to any of claims 5 to 8, wherein the maximum value (valmax) is selected from among at least the first value (val1), the second value (val2), and a third value greater than the second value (val2).

10. Converter or method according to claim 9, wherein:
the control circuit (CTRL) selects (1102) the third value when the mean current (Im) is higher than a third threshold higher than the first threshold (th1); and
the control circuit selects (306) the second value (val2) when the mean current (Im) is lower than a fourth threshold higher than the first threshold (th1) and lower than or equal to the third threshold, preferably lower than the third threshold.

11. Converter or method according to claim 10 as dependent on claim 7, wherein:
when the second value (val2) is selected:
- at the end of each current pulse (IL), the control circuit (CTRL) further triggers a third time delay representative of the third threshold; and
- the control circuit (CTRL) selects (1102) the third value if a beginning of the next current pulse (IL) occurs during said third time delay,
and wherein, when the third value is selected:
- at the end of each current pulse (IL), the control circuit (CTRL) triggers a fourth time delay representative of the fourth threshold; and
- the control circuit (CTRL) selects (306) the second value (val2) if a beginning of the next current pulse (IL) occurs after said fourth time delay.

12. Converter or method according to any of claims 7 to 11, wherein the end of each current pulse (IL) corresponds to a turning off of the second switch (IT2) while the first switch (IT1) is off, and the beginning of each current pulse (IL) corresponds to a turning on of the first switch (IT1) while the second switch (IT2) is off.

13. Converter according to any of claims 1 and 3 to 12, or method according to any of claims 2 to 12, wherein the first and second switches (IT1, IT2) are controlled in pulse frequency modulation, PFM.

14. Converter according to any of claims 1 and 3 to 13, or method according to any of claims 2 to 13, wherein, at each current pulse (IL), a duration of the on state of the first switch (IT1) is determined by a comparison of a first voltage ramp (Ramp1) with a first potential (Vref) determined by a setpoint value of an output potential (Vout) of the converter (1), and a duration of the on state of the second switch (IT2) is determined by a comparison of a second voltage ramp (Ramp2) with a second potential (Vref) determined by the setpoint value, the slopes of the first and second voltage ramps being different depending on the value (val1, val2) selected as the maximum value (valmax).
